# EUROPÄISCHE PATENTSCHRIFT

(11) **EP 0 999 103 B1**
(45) Veröffentlichungstag und Bekanntmachung des Hinweises auf die Patenterteilung: **25.05.2005**
(21) Anmeldenummer: 99121198.8
(22) Anmeldetag: 23.10.1999
(51) Int. Cl.: B60R 25/00, G07C 9/00, B60R 25/04

(54) **Benutzeridentifikationsvorrichtung**
User identification device
Dispositif d'identification d'un utilisateur

(30) Priorität: 04.11.1998 DE 19850792
(43) Veröffentlichungstag der Anmeldung: 10.05.2000
(73) Patentinhaber: ADAM OPEL AG, 65423 Rüsselsheim (DE)
(72) Erfinder: Nix, Axel, Dipl.-Ing., 65193 Wiesbaden (DE)
(74) Vertreter: Daniel, Ulrich W.P.

(56) Entgegenhaltungen:
- EP-A- 0 480 246
- EP-A- 0 848 123
- US-A- 5 646 701
- PATENT ABSTRACTS OF JAPAN vol. 1998, no. 04, 31. März 1998 (1998-03-31) & JP 09 322274 A (MITSUBISHI CABLE IND LTD), 12. Dezember 1997 (1997-12-12)

## Beschreibung

Die Erfindung bezieht sich auf eine Vorrichtung zur Kommunikation zwischen einem Kraftfahrzeug und einer Benutzeridentifikationseinheit mit den im Oberbegriff des Patentanspruches 1 angegebenen Merkmalen. Vorrichtungen dieser Art sind beispielsweise aus der DE 196 10 116 A1, DE 196 37 387 C1 oder EP 480 246 bekannt.

Zur Sicherung eines Kraftfahrzeugs gegen unbefugten Zutritt oder unberechtigte Benutzung ist der Fahrzeugnutzer mit einer Benutzeridentifikationseinheit (Transponder) ausgestattet. Im Fahrzeug ist eine erste Funk-Sende-/Empfangseinheit angeordnet, welche kommunikationsfähig mit einer zweiten Funk-Sende-/Empfangseinheit in der Benutzeridentifikationseinheit ist. Zwischen den beiden Einheiten werden verschlüsselte Daten ausgetauscht, wonach erkannt wird, ob ein berechtigter Fahrzeugnutzer die Ausführung bestimmter Fahrzeugfunktionen wünscht. Wurde eine ordnungsgemäße Berechtigung erkannt, schaltet zumindest eine fahrzeugseitige Steuervorrichtung die gewünschten Funktionen (Fahrzeugzugang; Fahrzeugstart...) frei.

Zur Verhinderung von Fremdmanipulationen wurden sehr aufwendige Wechselcodeverfahren eingeführt, die die Kommunikation abhörsicherer machen sollen, was jedoch noch nicht zur vollen Zufriedenheit gelingt. In der DE 196 10 116 A1 wurde vorgeschlagen, die Informationen von der Benutzeridentifikationseinheit zum Fahrzeug in zwei verschiedenen Frequenzen getrennt voneinander zu übertragen. Ein Vergleich der beiden empfangenen Informationen erfolgt und die Freigabe der Fahrzeugfunktionen wird nur bei Übereinstimmung vorgenommen. Durch die hier vorgeschlagene Nutzung zweier fester Frequenzen wird nur die Übertragungssicherheit, nicht jedoch die Abhörsicherheit verbessert.

Auch in der DE 196 37 387 C1 wird die Übertragungsqualität verbessert, indem einem Oszillator nach Beendigung der Datenübertragung eine veränderte Frequenz aufgezwungen wird, so daß seine Schwingung sehr schnell abklingt.

Bei heute auch als passive Zugangssysteme ausgeführten Identifikationsvorrichtungen werden unberechtigte, sogenannte "Relaisangriffe" bislang nicht wirkungsvoll verhindert. Dabei wird das Fahrzeug zum Absenden einer Kommunikations-Eröffnungsnachricht angeregt, diese wird empfangen und an eine Sende-/Empfangseinheit übermittelt, die nahe des Fahrzeugsbesitzers (der sich in einem Café oder in einem Geschäft befindet) positioniert wird. Die Benutzeridentifikationsvorrichtung antwortet auf das ausgesendete Signal und diese Antwort wird wieder zum Fahrzeug übertragen, womit dann ein unberechtigter Zugang erfolgen kann. Es wurde bereits vorgeschlagen, daß für die Kommunikation nur ein sehr eng begrenztes Zeitfenster zur Verfügung gestellt wird, was aber ebenfalls Probleme in sich birgt.

Es ist Aufgabe der Erfindung, eine Vorrichtung nach dem Oberbegriff des Patentanspruchs 1 zu schaffen, mit der eine manipulationssichere Benutzeridentifikation möglich ist.

Zur Lösung dieser Aufgabe weist die Vorrichtung die im Patentanspruch 1 genannten Merkmale auf. Einzelheiten der Erfindung ergeben sich aus den Patentansprüchen 2 und 3 sowie der folgenden Beschreibung.

Die Kommunikation zwischen Fahrzeug und Benutzeridentifikationseinheit findet mit wechselnden Frequenzen statt. Insbesondere die vom Benutzer zum Fahrzeug zu übermittelnden Daten werden in Datenblöcke geteilt und jedem Datenblock wird eine zufällig ermittelte Funkfrequenz innerhalb eines Frequenzbandes zugeordnet. Die zur Vorrichtung gehörenden Funk-Sende-/Empfangseinheiten sind jeweils mit einem schmalbandigen Filter ausgestattet, dessen Durchlaßfrequenzbereich einstellbar ist. Das Abhören zufällig gewählter Frequenzen ist praktisch unmöglich, bzw. mit einem enormen Aufwand verbunden. Die Sende-/Empfangseinheit des Fahrzeugs sendet wie bekannt eine Kommunikations-Eröffnungsmeldung, bestehend aus codierten Daten an die Benutzeridentifikationseinheit. Diesen Daten wird jedoch ebenfalls codiert eine Frequenzliste als Vorgabe zugefügt, die fahrzeugseitig zufällig erzeugt wurde. Die Filter der beiden Sende-/Empfangseinheiten werden anschließend für die folgende von der Benutzeridentifikationseinheit ausgehende Funksendung nach dieser Vorgabe eingestellt. Die zu sendenden Daten werden in Datenblöcke unterteilt und jeder Datenblock wird mit einer vorgegebenen Frequenz gesendet und fahrzeugseitig empfangen. Bei einem "Relaisangriff" müßten zwischengeschaltete Sende-/Empfangsgeräte Kenntnis von den jeweils genutzten Funkfrequenzen haben, was nur nach Analyse der codierten Frequenzliste möglich wäre.

Um auch letzte Unsicherheiten auszuschließen, wird vorgeschlagen, daß auch die vom Fahrzeug abgesendete Funk-Eröffnungsmeldung mit nicht konstanter Frequenz ausgesendet wird. Beim Absenden einer Eröffnungsmeldung wird auch die Funkfrequenz der nächstfolgenden Eröffnungsmeldung an die Benutzeridentifikationseinheit übermittelt und dort gespeichert. Der Filter der zugehörigen Sende-/-Empfangseinheit wird nach Abschluß der Kommunikation auf diese Frequenz eingestellt, so daß die nächste Eröffnungsmeldung empfangbar ist. Somit wird auch das Abhören der Eröffnungsmeldung quasi unmöglich.

Gehören zum Fahrzeug mehrere Benutzeridentifikationseinheiten, kann die Frequenz für die nächstfolgende Eröffnungsmeldung individuell für jede dieser Einheiten festgelegt werden.

Zusätzlich zu der beschriebenen Modulation der zu nutzenden Funkfrequenz kann von Datenblock zu Datenblock auch die Art der Signalcodierung variiert werden. Es kann einerseits eine Amplitudenmodulation und andererseits eine Frequenzmodulation Anwendung finden. Die Art der Codierung wird wie auch die Funkfrequenz zufällig ermittelt und den Datenblöcken zugeordnet, womit ein unerwünschter Systemzugriff zusätzlich erschwert wird.

Nach Abschluß einer erfolgreichen Kommunikation und Erkennen eines berechtigten Benutzers kann die jeweils gewünschte Fahrzeugfunktion wie bekannt von zumindest einer Steuereinheit des Fahrzeugs freigegeben werden. Bei Nutzung der vorgeschlagenen Vorrichtung kann die Manipulationssicherheit gegenüber bekannten Vorrichtungen wesentlich verbessert werden, was insbesondere bei passiven Zugangssystemen zur Verringerung von Fahrzeugdiebstählen führt.

In Ausführung der Erfindung wird bei der Kommunikation zwischen Fahrzeug und Benutzeridentifikationseinheit beispielsweise ein Frequenzband zwischen 433,05 MHz und 434,8 MHz genutzt. Dieses kann in 70 Kanäle mit einem 25 KHz-Raster eingeteilt werden. Die Eröffnungsmeldung enthält eine Vorgabe für zu nutzenden Frequenzen für beispielsweise 5 Datenblöcke, wobei eine zufällige Auswahl aus den 70 Kanälen vorgenommen wird. Beispielsweise werden codiert die Kanäle 63, 12 , 18 , 2, 45 als zu nutzende Kanäle an die Benutzeridentifikationseinheit übermittelt. Danach wird anschließend der

| Datenblock | in einem Bereich von |
|---|---|
| 1 | 434,6 bis 434,625 MHz |
| 2 | 434,325 bis 433,35 MHz |
| 3 | 433,475 bis 433,5 MHz |
| 4 | 433,075 bis 433,1 MHz |
| 5 | 434,15 bis 434,175 MHz |

ausgesendet, wozu die den Sende-/Empfangseinheiten zugeordneten Filter entsprechend eingestellt werden.

## Patentansprüche

1. Vorrichtung zur Kommunikation zwischen einem Kraftfahrzeug und einer Benutzeridentifikationseinheit, die aus einer ersten fahrzeugseitigen, Funk-Sende-/Empfangseinheit besteht, welche zur Benutzeridentifikation verschlüsselte Daten mit einer zweiten zur Benutzeridentifikationseinheit gehörenden Funk-Sende-/Empfangseinheit austauscht, wobei nach Erkennen einer autorisierten, zum Fahrzeug gehörenden Benutzeridentifikationseinheit Fahrzeugfunktionen freigegeben werden, **dadurch gekennzeichnet, daß** die Benutzeridentifikationseinheit die Daten aufgeteilt in Datenblöcke mit wechselnder Funkfrequenz zum Fahrzeug sendet, wobei Vorgaben über dabei zu nutzende Funkfrequenzen bei Beginn der Kommunikation verschlüsselt vom Fahrzeug zur Benutzeridentifikationseinheit übermittelt werden.

2. Vorrichtung nach Anspruch 1, **dadurch gekennzeichnet, daß** beide Funk-Sende-/Empfangseinheiten mit jeweils einem variabel einstellbaren schmalbandigen Filter zur Einstellung der empfangbaren/aussendbaren Funkfrequenzen versehen sind.

3. Vorrichtung nach Anspruch 1 oder 2, **dadurch gekennzeichnet, daß** auch die Vorgaben über von der Benutzeridentifikationseinheit zu nutzende Funkfrequenzen bei aufeinanderfolgenden Identifikationsvorgängen mit nicht konstanter Funkfrequenz vom Fahrzeug aus übermittelt werden, wobei die entsprechende Funkfrequenz für den nächstfolgenden Identifikationsvorgang bei jedem aktuellen Identifikationsvorgang verschlüsselt an die Benutzeridentifikationseinheit übermittelt und dort gespeichert wird.

## Claims

1. Apparatus for communication between a motor vehicle and a user identification unit, which consists of a first radio transmitting/receiving unit on the vehicle side which for user identification exchanges coded data with a second radio transmitting/receiving unit belonging to the user identification unit, wherein after detection of an authorised user identification unit belonging to the vehicle, vehicle functions are cleared, **characterised in that** the user identification unit sends the data divided into data blocks at varying radio frequency to the vehicle, wherein standards on radio frequencies to be used here are transmitted at the beginning of communication in coded form from the vehicle to the user identification unit.

2. Apparatus according to claim 1, **characterised in that** the two radio transmitting/receiving units are provided in each case with a variable narrow-band filter for adjustment of the radio frequencies which can be received/transmitted.

3. Apparatus according to claim 1 or 2, **characterised in that** the standards on radio frequencies to be used by the user identification unit are also transmitted from the vehicle in successive identification operations at a non-constant radio frequency, wherein the corresponding radio frequency for the next identification operation is in each current identification operation transmitted in coded form to the user identification unit and stored there.

## Revendications

1. Dispositif de communication entre un véhicule automobile et une unité d'identification d'utilisateur, comprenant une première unité radio d'émission-réception côté véhicule qui, à des fins d'identification de l'utilisateur, échange des données codées avec une seconde unité radio d'émission-réception faisant partie de l'unité d'identification d'utilisateur, dans lequel, après détection d'une unité d'identification d'utilisateur autorisée associée au véhicule, des fonctions du véhicule sont libérées, **caractérisé en ce que** l'unité d'identification d'utilisateur émet les données subdivisées en blocs de données, avec une fréquence radio qui varie, et dans lequel l'unité d'identification d'utilisateur émet les données subdivisées en blocs de données avec une fréquence radio variable, des indications sur la fréquence radio à utiliser étant transmises sous une forme codée par le véhicule automobile à l'unité d'identification d'utilisateur au début de la communication.

2. Dispositif selon la revendication 1, **caractérisé en ce que** les deux unités radio d'émission/réception sont munies chacune d'un filtre à bande étroite réglable pour le réglage des fréquences radio pouvant être reçues/émises.

3. Dispositif selon la revendication 1 ou 2, **caractérisé en ce que** les indications sur les fréquences radio à utiliser par l'unité d'identification d'utilisateur, dans le cas de processus d'identification successifs, sont transmises par le véhicule avec une fréquence radio non constante, la fréquence radio correspondante pour le processus d'identification à venir étant transmise sous une forme codée à l'unité d'identification d'utilisateur, pendant le processus d'identification d'utilisateur en cours, et mémorisée dans celle-ci.
